(19) Europäisches Patentamt / European Patent Office / Office européen des brevets

(11) **EP 4 664 738 A1**

(12) **DEMANDE DE BREVET EUROPEEN**

(43) Date de publication:
**17.12.2025 Bulletin 2025/51**

(21) Numéro de dépôt: **25181209.5**

(22) Date de dépôt: **05.06.2025**

(51) Classification Internationale des Brevets (IPC):
**H02M 1/00** *(2006.01)* **H02M 3/335** *(2006.01)*

(52) Classification Coopérative des Brevets (CPC):
**H02M 1/008; H02M 3/33573;** H02M 1/0012;
H02M 1/0043; H02M 1/0058; H02M 3/33576;
H02M 3/33584

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **10.06.2024 FR 2406122**

(71) Demandeurs:
• **Commissariat à l'Energie Atomique et aux Energies Alternatives**
**75015 Paris (FR)**
• **Université Grenoble Alpes**
**38400 Saint-Martin-d'Hères (FR)**
• **Centre National de la Recherche Scientifique**
**75016 Paris (FR)**
• **Institut National Polytechnique de Grenoble**
**38031 Grenoble Cedex (FR)**

(72) Inventeurs:
• **TARRAF, Rebecca**
**38054 GRENOBLE Cedex 09 (FR)**
• **CARCOUET, Sébastien**
**38054 GRENOBLE Cedex 09 (FR)**
• **FREY, David**
**38400 SAINT MARTIN D'HERES (FR)**
• **LEIRENS, Sylvain**
**38054 GRENOBLE Cedex 09 (FR)**
• **MAYNARD, Xavier**
**38054 GRENOBLE Cedex 09 (FR)**

(74) Mandataire: **Atout PI Laplace**
**Immeuble Up On**
**25 Boulevard Romain Rolland**
**CS 40072**
**75685 Paris Cedex 14 (FR)**

(54) **PROCÉDÉ DE COMMANDE DES INTERRUPTEURS D'UN CONVERTISSEUR À MULTIPLES PONTS ACTIFS**

(57) L'invention se rapporte à un procédé de commande des interrupteurs d'un convertisseur à multiples ponts actifs, le procédé comprenant les étapes consistant à :

a) effectuer un balayage entre 0 et $\pi$ de la valeur du déphasage interne ($\alpha_1$) d'un port dit de référence, et, pour chaque valeur du déphasage interne ($\alpha_1$) du port de référence, les sous-étapes suivantes :

a1) pour chacun des n-1 ports différents du port de référence, calculer le déphasage interne ($\alpha_i$) ;

a2) pour chacun des n-1 ports différents du port de référence, calculer le déphasage externe ($\varphi_i$) ;

a3) calculer un ensemble d'au moins un paramètre de puissance comprenant les pertes totales du convertisseur ($P_{total\ losses}$) et, de façon facultative, le nombre d'interrupteurs du convertisseur en condition de ZVS ;

a4) déterminer une valeur optimisée du déphasage interne ($\alpha_{1,OPT}$) du port de référence;

b) mise à jour des commandes de commutation des interrupteurs.

[Fig. 7]

FIG.7

## Description

### Domaine technique

L'invention se situe dans le domaine de l'électronique de puissance, et en particulier dans le domaine de la conversion DC/DC. L'invention se rapporte à un procédé de commande des interrupteurs d'un convertisseur à multiples ponts actifs (également appelé convertisseur MAB pour Multi-port Active-Bridge).

Un convertisseur MAB est une topologie de concentrateur énergétique qui a émergé ces dernières années. Cette structure multiport a récemment suscité beaucoup d'attention, notamment pour les applications sollicitant des sources d'énergie renouvelables et des systèmes de stockage d'énergie.

La figure 1 illustre un exemple de convertisseur MAB 1 connectant plusieurs sources (réseau électrique 2, panneau photovoltaïque 3), charges 4 et système de stockage d'énergie électrique (accumulateur 5) à un transformateur multi-enroulement 6 à travers une pluralité de convertisseurs DC/AC 7. La consommation, la production et le stockage d'électricité se font en un seul endroit, et avec peu d'étages de conversion.

La figure 2 illustre de façon plus détaillée la topologie du convertisseur MAB.

Chaque port (Prt$_1$, Prt$_2$, ..., Prt$_i$, ..., Prt$_n$) est constitué d'une source de tension (V$_1$, V$_2$, ..., V$_i$, ..., V$_n$), qui représente soit une source d'alimentation réelle, soit une charge ayant le comportement d'une source de tension, et d'un pont en H (Pnt$_1$, Pnt$_2$, ..., Pnt$_i$, ..., Pnt$_n$) dont le fonctionnement est connu de l'homme du métier. Chaque pont en H Pnt$_i$ est constitué de quatre transistors (T$_{i1}$, T$_{i2}$, T$_{i3}$, T$_{i4}$).

L$_i$ représente l'inductance de fuite de l'enroulement du transformateur du port Prt$_i$, qui peut être connecté à une inductance série externe.

Le convertisseur MAB permet d'obtenir un transfert de puissance bidirectionnel, une haute efficacité et une isolation électrique intrinsèque.

Le principe de la commande d'un convertisseur MAB consiste à fournir à chaque port Prt$_i$ la puissance active P$_i$ dont il a besoin à chaque instant.

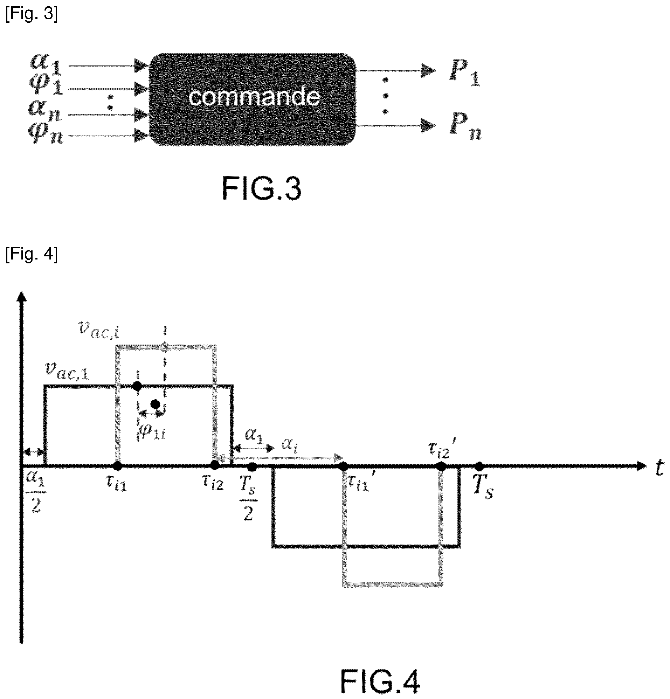

Le système de commande d'un convertisseur MAB à n ports requière n sorties de commande qui sont les n puissances actives. Pour faire varier ces sorties, il faut agir sur les entrées de commande. De façon connue, un convertisseur MAB dispose de deux types d'entrées de commande : les déphasages internes $\alpha_i$ et les déphasages externes $\varphi_i$. Les entrées et sorties du système de commande sont illustrées par la figure 3.

La puissance du port référence n'est pas contrôlée car elle est déterminée par la loi de conservation de puissance : la somme des puissances entrantes au convertisseur MAB est égale à la somme des puissances sortantes. Donc, le nombre de sorties de commande devient (n-1) pour un MAB ayant n ports.

La figure 4 illustre les tensions AC au niveau d'un port de référence, par exemple le premier port Prt$_1$, et d'un port Prt$_i$, sur une période de commutation $T_s$, avec les déphasages internes et externes.

Par convention, le déphasage externe d'un port dit de référence est considéré comme nul ($\varphi_1 = 0$). Tous les autres ports sont donc décalés par rapport à ce port. Le déphasage externe entre le port Prt$_i$ et le port Prt$_j$ est noté $\varphi_{ij} = \varphi_i - \varphi_j$. Le déphasage interne d'un port Prt$_i$ est noté $\alpha_i$.

Il peut être démontré que les instants de commutation d'un port Prt$_i$ peuvent être exprimés en fonction de ses déphasages interne et externe avec la relation suivante:

$$\tau_{i1} = \left(\varphi_{1i} + \frac{\alpha_i}{2}\right) \cdot \frac{T_s}{2\pi}$$

$$\tau_{i2} = \frac{T_s}{2} + \left(\varphi_{1i} - \frac{\alpha_i}{2}\right) \cdot \frac{T_s}{2\pi}$$

$T_s$ correspond à la période de commutation du convertisseur ($T_s = 1/f_s$).

Ainsi, en ayant déterminé le déphasage interne et le déphasage externe d'un port, il est possible de calculer les instants de commutation des interrupteurs de chaque port.

La détermination du déphasage interne $\alpha_i$ et du déphasage externe $\varphi_i$ pour chaque port revient à résoudre un système de (n-1) équations à (2n-1) inconnues, ce qui engendre une infinité de solutions.

Une première technique de détermination de la commande dans un convertisseur MAB consiste à appliquer la modulation dite EPS (External Phase Shift), décrite notamment dans l'article de [Galeshi] dans laquelle il est considéré que le déphasage interne $\alpha_i$ est nul pour tous les ports. Cette technique présente l'avantage d'offrir une solution unique (système de n équations à n inconnues) ; elle est efficace lorsque le convertisseur fonctionne à puissance nominale. Toutefois, le rendement n'est pas optimal à faible puissance.

Une deuxième technique de détermination de la commande dans un convertisseur MAB, décrite notamment dans l'article de [Hebala], consiste à faire varier le déphasage interne $\alpha_i$ et à détecter un minimum local du courant RMS dans le transformateur (« perturbe et observe »). La perturbation est effectuée sur le convertisseur en temps réel, sans étude d'un modèle mathématique. Cette technique est simple à mettre en œuvre, et l'ajout de ports n'augmente pas la complexité ou le temps de calcul. Toutefois, seuls les courants RMS sont pris en considération ; ainsi, cette technique ne tient compte que des pertes en conduction du système. Plus généralement, le fait de s'arrêter au premier minimum local n'offre pas une solution optimisée.

Une troisième technique de détermination de la commande dans un convertisseur MAB, décrite notamment dans l'article de [Dey], consiste créer un modèle mathématique générique qui prend en considération toutes les variables du système. Cette technique nécessite une grande puissance de calcul. Ainsi, la modélisation est effectuée « hors ligne » (en amont de la conversion), puis les valeurs optimales des déphasages internes et externes sont stockées dans un tableau. Lors de la conversion les points les plus proches sont extraits du tableau en temps réel. En conditions réelles, il n'est pas possible de stocker tous les points, donc l'extraction est effectuée sur des valeurs proches des points réels ; ainsi, les valeurs des déphasages internes et externes peuvent être sous-optimales.

Il existe donc un besoin pour fournir un procédé de commande d'un convertisseur MAB qui conserve un rendement élevé à faible puissance, et qui puisse déterminer des valeurs optimales de déphasage en temps réel.

**Résumé de l'invention**

Un objet de l'invention est donc un procédé de commande des interrupteurs d'un convertisseur à multiples ponts actifs et comprenant n ports, le procédé comprenant les étapes consistant à :

a) effectuer un balayage entre 0 et $\pi$ de la valeur du déphasage interne d'un port dit de référence, et, pour chaque valeur du déphasage interne du port de référence, les sous-étapes suivantes :

a1) pour chacun des n-1 ports différents du port de référence, calculer le déphasage interne en appliquant une condition d'élimination de l'échange de puissance réactive entre les ports, à partir de la tension mesurée aux bornes des ports ;

a2) pour chacun des n-1 ports différents du port de référence, calculer le déphasage externe à partir de contraintes sur des valeurs de puissances désirées à chacun desdits n-1 ports différents du port de référence ;

a3) calculer un ensemble d'au moins un paramètre de puissance comprenant les pertes totales du convertisseur et, de façon facultative, le nombre d'interrupteurs du convertisseur en condition de ZVS ;

a4) déterminer une valeur optimisée du déphasage interne du port de référence, ladite valeur optimisée correspondant à un extremum global de l'ensemble d'au moins un paramètre de puissance ;

b) mise à jour des commandes de commutation des interrupteurs en fonction des valeurs optimisées du déphasage interne et du déphasage externe de tous les ports, les valeurs optimisées du déphasage interne et du déphasage externe ($\varphi_{i,OPT}$) étant calculées à partir de la valeur optimisée du déphasage interne du port de référence.

Avantageusement, les pertes totales du convertisseur correspondent à la somme des pertes de conduction sur tous les ports du convertisseur et des pertes de commutation sur tous les ports du convertisseur.

Avantageusement, l'ensemble d'au moins un paramètre de puissance correspond uniquement aux pertes totales du convertisseur, la valeur optimisée du déphasage interne du port de référence correspond à un minimum local des pertes totales du convertisseur.

Avantageusement, l'ensemble d'au moins un paramètre de puissance correspond aux pertes totales du convertisseur et au nombre d'interrupteurs du convertisseur en condition de ZVS, la valeur optimisée du déphasage interne du port de référence correspond à un maximum du nombre d'interrupteurs du convertisseur en condition de ZVS.

Avantageusement, s'il existe au moins deux maxima du nombre d'interrupteurs du convertisseur en condition de ZVS, la valeur optimisée du déphasage interne du port de référence correspond à un minimum local des pertes totales du convertisseur parmi les au moins deux maxima du nombre d'interrupteurs du convertisseur en condition de ZVS.

Avantageusement, le procédé comprend, entre les sous-étapes a2) et a3), une sous étape a21) comprenant la détection d'au moins un déphasage externe ayant une valeur strictement supérieure à 37°, le procédé ne comprenant pas d'étape de mise à jour des instants de commutation des interrupteurs si au moins un déphasage externe ayant une valeur strictement supérieure à 37° est détecté.

Avantageusement, le procédé comprend une étape a0) d'initialisation à zéro de la valeur du déphasage interne de tous les ports, et d'attribution d'une valeur de déphasage externe qui est calculée par modulation de déphasage externe.

Avantageusement, les valeurs optimisées du déphasage externe sont transmises à un contrôleur proportionnel intégral avant l'étape b).

Avantageusement la condition d'élimination de l'échange de puissance réactive entre deux ports est définie par la formule suivante :

$$\left| \frac{V_i}{n_{1i}} . \cos\left(\frac{\alpha_i}{2}\right) = \frac{V_j}{n_{1j}} . \cos\left(\frac{\alpha_j}{2}\right) \right.$$

$V_i$ et $V_j$ correspondent respectivement à la tension DC aux bornes des ports i et j ;

$\alpha_i$ et $\alpha_j$ correspondent respectivement au déphasage interne des ports i et j ;

$n_{1i}$ et $n_{1j}$ correspondent respectivement au rapport de spires entre le port i et le port de référence, et au rapport de spires entre le port j et le port de référence.

Avantageusement, la mise à jour des commandes de commutation des interrupteurs est effectuée sous réserve qu'un changement de tension ou de valeur de puissance désirée aux bornes d'au moins un des ports a été détecté.

Avantageusement, les valeurs de puissances désirées sont déterminées à partir d'un modèle d'approximation harmonique généralisée d'ordre k, et dans lequel k=7 pour le calcul des pertes totales du convertisseur, et k=101 pour le calcul du nombre d'interrupteurs du convertisseur en condition de ZVS.

L'invention se rapporte également à un dispositif de commande des interrupteurs d'un convertisseur à multiples ponts actifs et comprenant n ports, le dispositif étant configuré pour :

a) effectuer un balayage entre 0 et $\pi$ de la valeur du déphasage interne d'un port dit de référence, et, pour chaque valeur du déphasage interne du port de référence :

a1) pour chacun des n-1 ports différents du port de référence, calculer le déphasage interne en appliquant une condition d'élimination de l'échange de puissance réactive entre les ports, à partir de la tension mesurée aux bornes des ports ;

a2) pour chacun des n-1 ports différents du port de référence, calculer le déphasage externe à partir de contraintes sur des valeurs de puissances désirées à chacun desdits n-1 ports différents du port de référence ;

a3) calculer un ensemble d'au moins un paramètre de puissance correspondant aux pertes totales du convertisseur et, de façon facultative, au nombre d'interrupteurs du convertisseur en condition de ZVS ;

a4) déterminer une valeur optimisée du déphasage interne du port de référence, ladite valeur optimisée correspondant à un extremum global de l'ensemble d'au moins un paramètre de puissance ;

b) mettre à jour des commandes de commutation des interrupteurs en fonction des valeurs optimisées du déphasage interne et du déphasage externe de tous les ports, les valeurs optimisées du déphasage interne et du déphasage externe étant calculées à partir de la valeur optimisée du déphasage interne du port de référence.

L'invention se rapporte également à un système de conversion, comprenant un convertisseur à multiples ponts actifs et comprenant n ports, et comprenant en outre un dispositif de commande précité.

**Description des figures**

D'autres caractéristiques, détails et avantages de l'invention ressortiront à la lecture de la description faite en référence aux dessins annexés donnés à titre d'exemple.

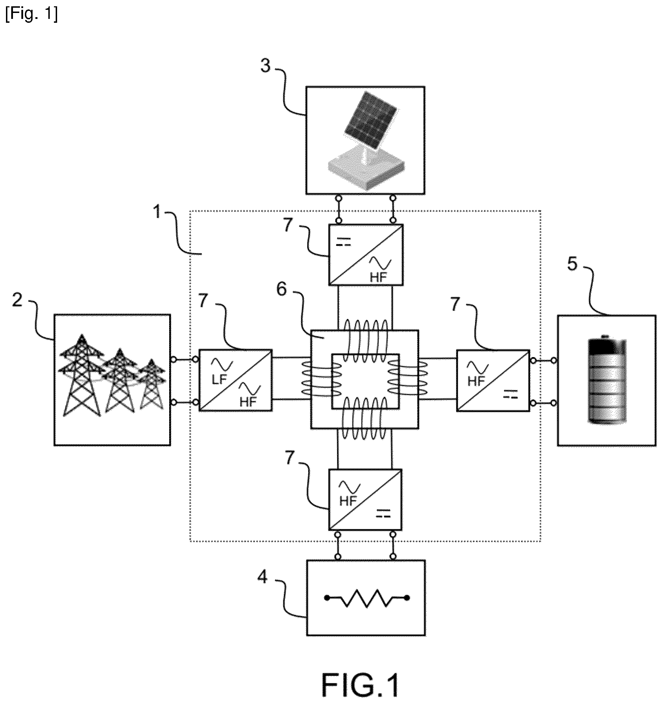

La figure 1, déjà décrite, illustre un exemple de convertisseur MAB connecté à différentes sources.

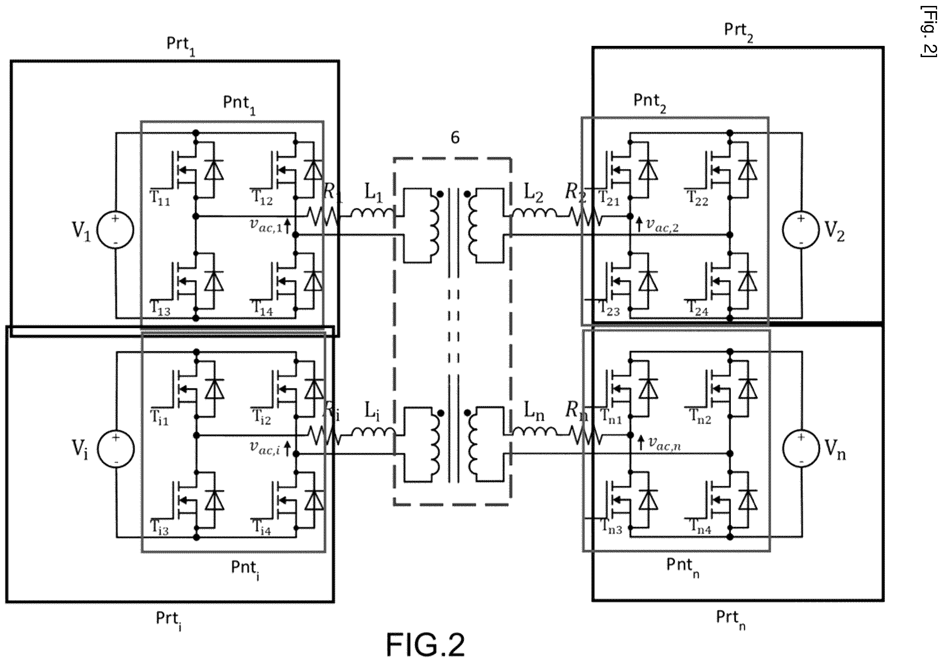

La figure 2, déjà décrite, illustre une topologie de convertisseur MAB.

La figure 3, déjà décrite, illustre les entrées et sorties de la commande du convertisseur MAB.

La figure 4, déjà décrite, illustre la tension AC aux bornes d'un port.

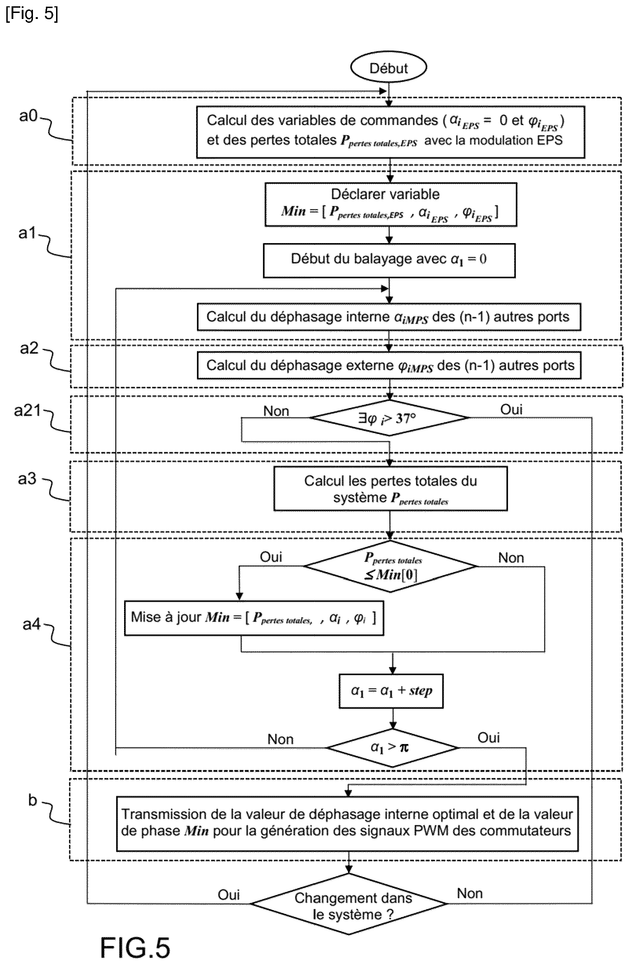

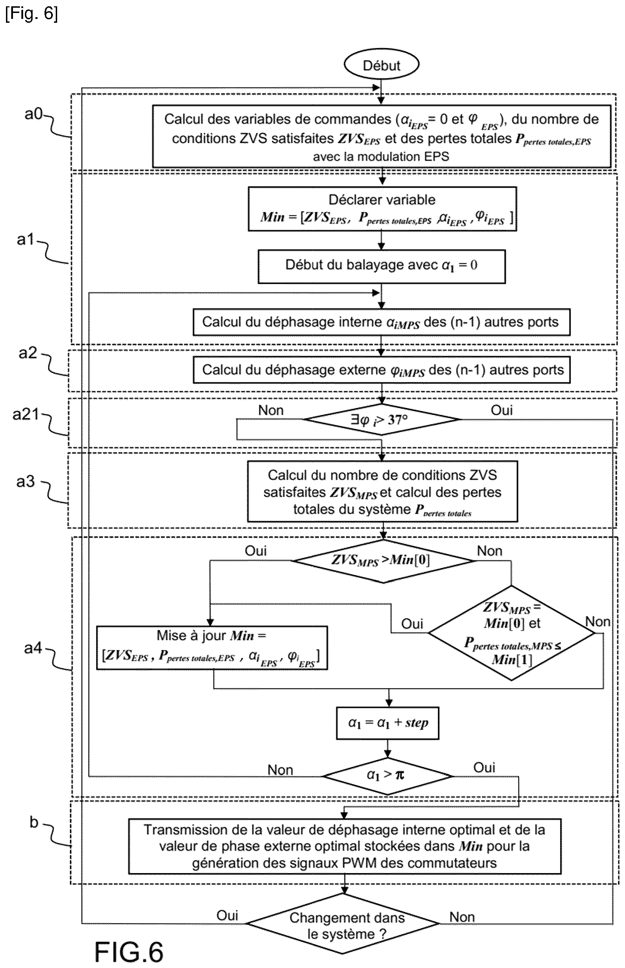

La figure 5 et la figure 6 illustrent deux organigrammes du procédé selon l'invention.

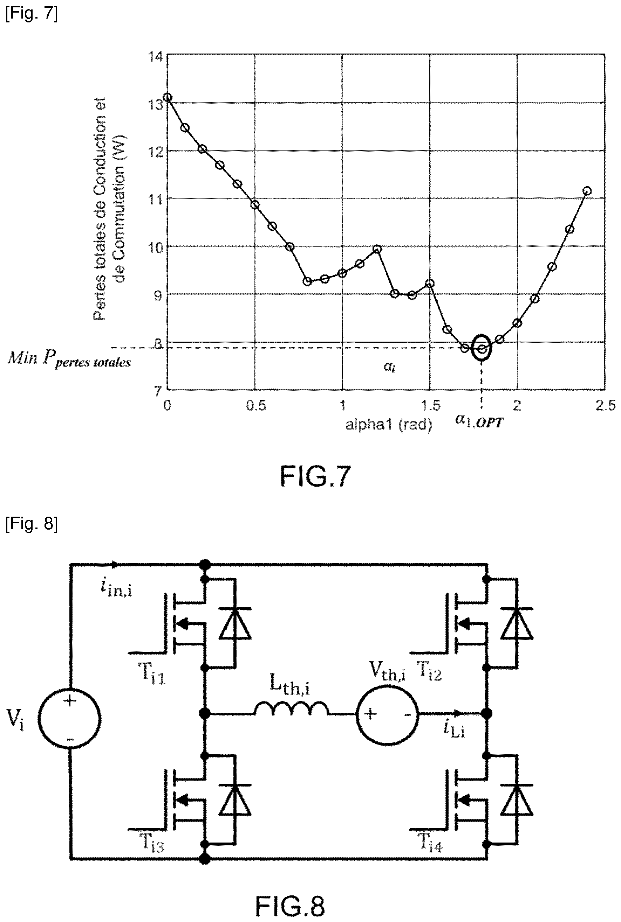

La figure 7 illustre la détermination d'une valeur optimisée du déphasage interne $\alpha_{1,OPT}$ selon un premier mode de réalisation

La figure 8 illustre un circuit équivalent Thevenin d'un port.

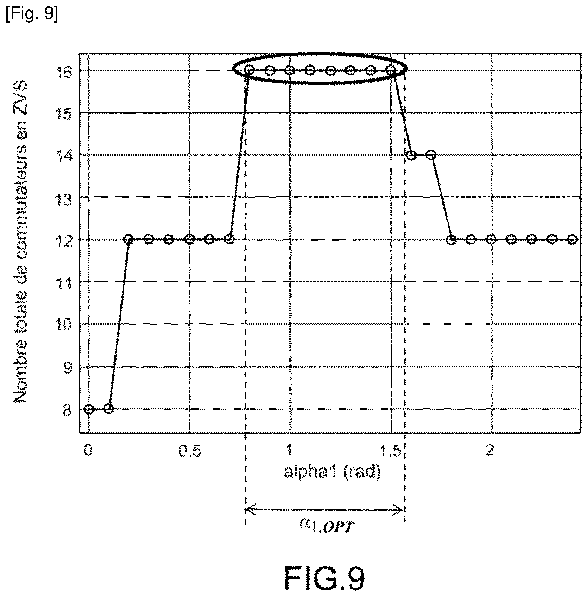

La figure 9 illustre la détermination d'une valeur optimisée du déphasage interne $\alpha_{1,OPT}$ selon un deuxième mode de réalisation

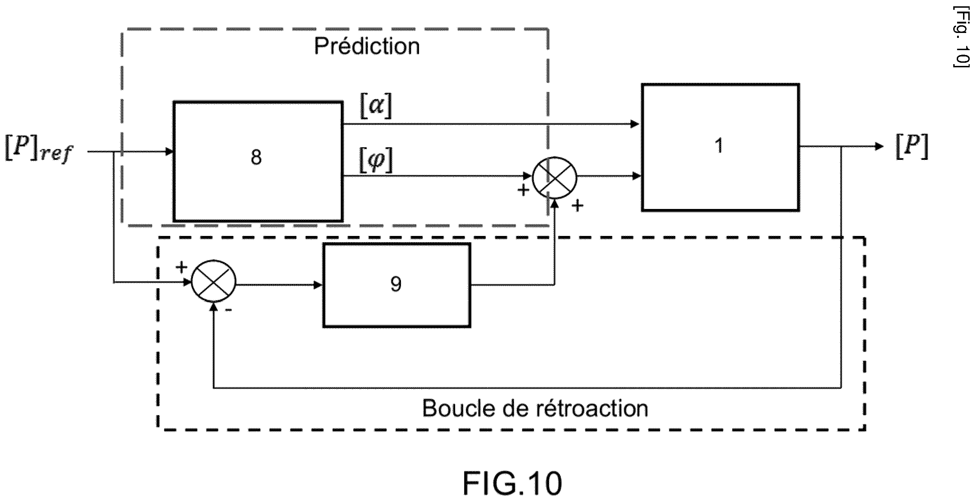

La figure 10 illustre un diagramme du système apte à mettre en œuvre le procédé selon l'invention.

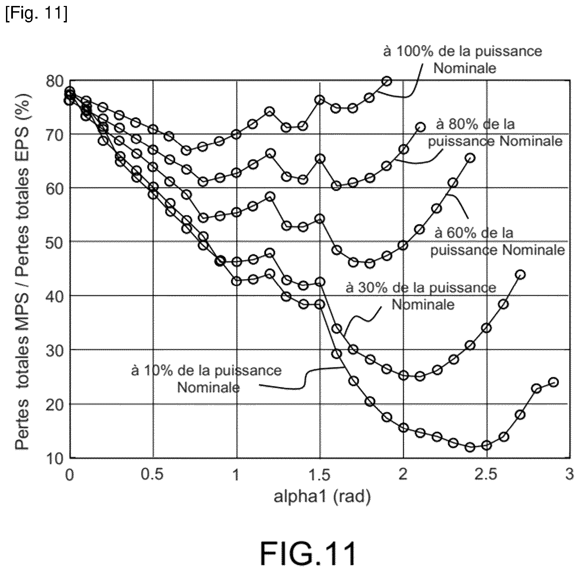

Les figures 11 à 15 illustrent des résultats expérimentaux du procédé selon l'invention.

**Description détaillée**

Le procédé selon l'invention repose sur un balayage entre 0 et $\pi$ de la valeur du déphasage interne $\alpha_1$ d'un port dit de référence, par exemple le port Prt$_1$ (n'importe quel autre port peut être défini en tant que port de référence). Le procédé est itéré pour une pluralité de valeurs du déphasage interne $\alpha_1$. Le pas d'itération peut être prédéterminé, et réglable par l'utilisateur, en fonction du degré de précision souhaité.

Pour chaque valeur du déphasage interne $\alpha_1$ du port de référence Prt$_1$, le déphasage interne $\alpha_{iMPS}$ des autres ports est calculé, en appliquant une condition d'élimination de l'échange de puissance réactive entre les ports, à partir de la tension mesurée aux bornes des ports.

Selon un mode de réalisation, la condition d'élimination de l'échange de puissance réactive entre les ports peut être déterminée de la façon suivante.

En utilisant la première approximation harmonique des signaux alternatifs d'un convertisseur MAB, il peut être déterminé que la puissance réactive $Q_{ij}$ échangée entre un port Prt$_i$ et un port Prt$_j$ est égale à :

$$Q_{ij} = \frac{8}{\pi^2 L_{ij}\omega_s} \cdot \left[ \left(\frac{V_i}{n_{1i}}\right)^2 \cdot \cos^2\left(\frac{\alpha_i}{2}\right) - \left(\frac{V_j}{n_{1j}}\right)^2 \cdot \cos^2\left(\frac{\alpha_j}{2}\right) \right] \#(1)$$

$V_i$ correspond à la tension DC du port Prt$_i$

$\omega_s = 2\pi f_s$ et $f_s$ est la fréquence de commutation du convertisseur.

$$L_{ij} = \begin{cases} \text{non applicable,} & \forall i = j \\ L'_i + L'_j + L'_i L'_j \left( \sum_{k \neq i,j}^{n} \frac{1}{L'_k} \right), & \forall i \neq j \end{cases}$$

$L_i' = L_i/n_{1i}^2$ correspond à l'inductance de fuite d'un port Prt$_i$ vis-à-vis du port de référence Prt$_1$, et $n_{1i} = n_i/n_1$ correspond au rapport de nombre de spires entre le port Prt$_i$ et le port de référence Prt$_1$.

Lorsque la puissance réactive circule dans un convertisseur, les courants de circulation augmentent, tout comme les pertes du système. Par conséquent, minimiser l'échange de puissance réactive entre les ports augmente l'efficacité du système à certains points de fonctionnement, en particulier à des charges légères, car le rapport entre la puissance réactive et la puissance apparente totale est plus élevé lorsque la puissance active est faible. De l'équation #(1), nous pouvons déduire que l'élimination de l'échange de puissance réactive entre ports peut se faire en réalisant l'égalité suivante :

$$\frac{V_i}{n_{1i}} \cdot \cos\left(\frac{\alpha_i}{2}\right) = \frac{V_j}{n_{1j}} \cdot \cos\left(\frac{\alpha_j}{2}\right) \quad \#(2)$$

L'obtention de l'égalité #(1) implique par ailleurs que les valeurs RMS des premiers harmoniques de la tension AC des ports $Prt_i$ et $Prt_j$ soient égales, ce qui peut être intéressant lorsqu'il y a des décalages de tension, car les variations de tensions DC sont ainsi compensées, et la commutation douce peut ainsi être rétablie.

A partir de l'équation #(2), on peut en déduire les déphasages internes des autres ports, à partir de la valeur du déphasage interne $\alpha_1$ du port de référence $Prt_1$ :

$$\alpha_i = 2 \cdot arccos\left(\frac{V_1}{V_i} \cdot n_{1i} \cdot cos\left(\frac{\alpha_1}{2}\right)\right)$$

Les tensions DC $V_i$ peuvent être mesurées par dispositifs de mesure connus de l'homme du métier.

De même, pour chaque valeur du déphasage interne ($\alpha_1$) du port de référence, et après calcul des déphasages internes des autres ports en utilisant l'expression précédente, les déphasages externes $\varphi_i$ des ports non référence sont calculés à partir des contraintes sur les valeurs de puissances désirées $P_i$, en utilisant l'expression suivante dérivée du modèle d'approximation harmonique généralisée :

$$P_i = \sum_{\substack{j=1 \\ j \neq i}}^{n} P_{ji}$$

Sachant que:

$$|P_{ij}| = \frac{4}{\pi^3 f_s} \cdot \sum_{\substack{k=1 \\ k\,impair}}^{\infty} \frac{1}{k^3} \cdot \frac{V_i V_j}{n_{1i} n_{1j}} \cdot \frac{1}{L_{ij}} \cos\left(k\frac{\alpha_i}{2}\right) \cdot \cos\left(k\frac{\alpha_j}{2}\right) \cdot \left(k\left(\phi_{1j} - \phi_{1i}\right)\right)$$

n est le nombre total de ports du MAB et k et l'ordre d'harmonique.

Le procédé comprend également une sous-étape de calcul d'un ensemble d'au moins un paramètre de puissance correspondant aux pertes totales du convertisseur ($P_{total\ losses,MPS}$) et, de façon facultative, au nombre d'interrupteurs du convertisseur en condition de ZVS, pour chaque valeur du déphasage interne $\alpha_1$ du port de référence $Prt_1$.

Ainsi, deux modes de réalisation peuvent être envisagés.

Selon un premier mode de réalisation, seules les pertes totales du convertisseur sont prises en considération.

Les pertes totales du convertisseur MAB sont considérées comme égales à la somme des pertes de conduction $P_{cond,i}$ et des pertes de commutation $P_{sw,i}$ de tous ses ports. Les autres pertes, telles que les pertes dans le fer, sont négligées. Les pertes totales $P_{total\ losses}$ peuvent donc être calculées de la façon suivante :

$$P_{total\ losses} = \sum_{i=1}^{n} P_{cond,i} + \sum_{i=1}^{n} P_{sw,i}$$

Les pertes de conduction $P_{cond,i}$ d'un port $Prt_i$ peuvent être calculées de la façon suivante :

$$P_{cond,i} = \left(R_i + 2R_{ds,on}\right) \cdot I_{i,rms}^{\,2}$$

$R_i$ correspond à la résistance série au niveau du port $Prt_i$ et $R_{ds,on}$ correspond à la résistance d'un commutateur activé, de telle sorte qu'un maximum de deux commutateurs soient activés à la fois dans chaque port. $I_{i,rms}$ est la valeur RMS (Root Mean Square) du courant alternatif circulant à travers le port $Prt_i$ dont l'expression est définie par la formule suivante :

$$I_{i,rms}^2 = \frac{1}{T_s} \int_0^{T_s} i_{L,i}^2(t) dt$$

L'expression du courant total $i_{L,i}$ provenant du port $Prt_i$ vers les autres ports, référé à son propre côté du transformateur, peut être définie de la façon suivante :

$$i_{L,i}(t) = \sum_{\substack{j=1 \\ j \neq i}}^{n} \frac{i_{ij}(t)}{n_{1i}}$$

avec

$$i_{ij}(t) = \frac{1}{L_{ij}} \int_0^t \left( v_{ac,i}{}'(t) - v_{ac,j}{}'(t) \right) dt$$

$$i_{ij}(t) = \frac{4}{\pi w_s L_{ij}} \sum_{\substack{k=1 \\ k\ impair}}^{\infty} \left[ -\frac{V_i}{n_{1i}.k^2} \cos\left(k\frac{\alpha_i}{2}\right).\cos(k.(w_s t - \varphi_{1i})) \right.$$

$$\left. + \frac{V_j}{n_{1j}.k^2} \cos\left(k\frac{\alpha_j}{2}\right).\cos\left(k.(w_s t - \varphi_{1j})\right) \right]$$

avec $v_{ac,i}{}' = v_{ac,i}/n_{1i}$

Les pertes de commutation $P_{sw,i}$ d'un port $Prt_i$ permettent de quantifier la perte de commutation douce des commutateurs de chaque port. Les pertes de commutation $P_{sw,i}$ sont calculées en déterminant au préalable si $\alpha_i > 0$ ou si $\alpha_i = 0$.

Si $\alpha_i = 0$, les pertes de commutation $P_{sw,i}$ sont calculées de la façon suivante :

$$P_{sw,i} = 2.V_D(\tau_{i1}).I_D(\tau_{i1}).f_s.[t_{ON}.(1 - ZVS_{i1}) + t_{OFF}] + 4.P_{C_{oss}}(\tau_{i1})$$

Avec les variables suivantes :

$$V_D(\tau_{ik}) = V_i$$

$$I_D(\tau_{ik}) = \left| i_{L,i}(\tau_{ik}) \right|$$

$$ZVS_{ik} = \begin{cases} 1 & si\ les\ conditions\ \#1, \#2, et\ \#3\ sont\ satisfaites\ à\ l'instant \tau_{ik} \\ 0 & dans\ les\ autres\ cas \end{cases}$$

| Valeur de déphasage interne | Condition #1 sur le sens du courant | Condition #2 sur la valeur minimum du courant | Condition #3 sur la valeur minimum du temps mort de commutation |
|---|---|---|---|
| $\alpha_i > 0$ | $i_{L,i}(\tau_{i1}) < 0$ | $\|i_{L,i}(\tau_{i1})\| \geq \sqrt{2\dfrac{C_{oss}V_i^2}{L_{th,i}} - 4\dfrac{C_{oss}V_{th,i}(\tau_{i1})V_i}{L_{th,i}}}$ | $t_{di1,min} = \dfrac{1}{w_r}\left(\arccos\left(-\dfrac{\left(V_i - V_{th,i}(\tau_{i1})\right)}{V_{th,i}(\tau_{i1})}\cos\left(\arctan\dfrac{A_{i1}}{B_{i1}}\right)\right) - \arctan\dfrac{A_{i1}}{B_{i1}}\right)$ |
|  | $i_{L,i}(\tau_{i2}) > 0$ | $\|i_{L,i}(\tau_{i2})\| \geq \sqrt{-2\dfrac{C_{oss}V_i^2}{L_{th,i}} + 4\dfrac{C_{oss}V_{th,i}(\tau_{i2})V_i}{L_{th,i}}}$ | $t_{di2,min} = \dfrac{1}{w_r}\left(\arccos\left(-\dfrac{V_{th,i}(\tau_{i2})}{\left(V_i - V_{th,i}(\tau_{i2})\right)}\cos\left(\arctan\dfrac{A_{i2}}{B_{i2}}\right)\right) - \arctan\dfrac{A_{i2}}{B_{i2}}\right)$ |
| $\alpha_i = 0$ | $i_{L,i}(\tau_{i1}) < 0$ | $\|i_{L,i}(\tau_{i1})\| \geq 2\sqrt{-\dfrac{C_{oss}V_{th,i}(\tau_{i1})V_i}{L_{th,i}}}$ | $t_{di1,min} = \dfrac{1}{w_r}\left(\arccos\left(\dfrac{\left(V_i - V_{th,i}(\tau_{i1})\right)}{\left(-V_i - V_{th,i}(\tau_{i1})\right)}\cos\left(\arctan\dfrac{A_{i1}}{B_{i1}}\right)\right) - \arctan\dfrac{A_{i1}}{B_{i1}}\right)$ |

$L_{th,i}$ sont respectivement la tension et l'inductance du schéma équivalent de Thevenin d'un port Prt$_i$ (cf. figure 9).

$A_{i1}$ et $B_{i1}$ sont des constants réelles calculées à partir des conditions initiales de l'instant de commutation $i_{L,i}(0) = i_{L,i}(\tau_{i1})$ et $v_x(0) = 0$) et $w_r = 2\pi f_r$ avec $f_r$ la fréquence de resonance du circuit LC composé de l'inductance de Thevenin $L_{th,i}$ et des capacités parasites.

La perte provoquée par la charge/décharge de la capacité parasite d'un interrupteur se calcule comme suit:

$$P_{C_{oss}} = \frac{1}{2}.C_{oss}.V^2{}_{C_{oss},final}.f_s$$

$C_{oss}$ correspond à la capacité parasite

A la fin d'un instant de commutation, la valeur finale de la tension $V_{C_{oss},final}$ de la capacité parasite $C_{oss}$ à la mise sous tension est donc définie ainsi:

$$|V_{C_{oss},final} = \begin{cases} 0 & en\ cas\ de\ commutation\ douce\ (ZVS) \\ V_i & en\ cas\ de\ commutation\ dure \\ \Delta V & en\ cas\ de\ commutation\ douce\ incomplète \end{cases}$$

La commutation douce incomplète se produit lorsque la capacité d'un interrupteur d'un port n'est pas entièrement déchargée lorsqu'il est activé, il reste ainsi une tension résiduelle $\Delta V$ dont le calcul n'est pas détaillé dans la présente description.

Si $\alpha_i > 0$, les pertes de commutation $P_{sw,i}$ sont calculées de la façon suivante :

$$P_{sw,i} = 2.\left[P_{ON}(\tau_{i1}) + P_{OFF}(\tau_{i1}) + P_{ON}(\tau_{i2}) + P_{OFF}(\tau_{i2})\right] + 2.P_{C_{oss}}(\tau_{i1}) +$$

$$2.P_{C_{oss}}(\tau_{i2})$$

Reformulé autrement :

$$P_{sw,i} = V_D(\tau_{i1}).(\tau_{i1}).f_s.\left[t_{ON}.(1 - ZVS_{i1}) + t_{OFF}\right]$$
$$+ V_D(\tau_{i2}).I_D(\tau_{i2}).f_s.\left[t_{ON}.(1 - ZVS_{i2}) + t_{OFF}\right] + 2.P_{C_{oss}}(\tau_{i1}) + 2.P_{C_{oss}}(\tau_{i2})$$

Les instants de commutation $\tau_{i1}$ et $\tau_{i2}$ ont été définis précédemment, en référence à la figure 4.

Une fois que les pertes totales du convertisseur ont été calculées, on détermine la valeur du déphasage interne $\alpha_{1,OPT}$ du port de référence pour laquelle les pertes totales du convertisseur sont minimales. La figure 7 illustre les pertes totales du convertisseur en fonction de différentes valeurs du déphasage interne du port de référence à 60% de sa puissance nominale.

Les résultats de la simulation sur les figures 7 et 9 ont été obtenus avec un convertisseur MAB à quatre ports, et les paramètres suivants :

$$V_1 = 200\,V$$

$$V_2 = 180\,V$$

$$V_3 = 160\,V$$

$$V_4 = 240\,V$$

$$f_s = 40\,kHz$$

$$Puissance\ nominale\ de\ chaque\ port = 500W$$

Sur l'exemple de la figure 7, il apparaît que les pertes sont minimales pour $\alpha_1$ = 1,8 *rad*. Cette valeur est la valeur optimisée $\alpha_{1,OPT}$ du déphasage interne du port de référence.

Le déphasage externe du port de référence, et les déphasages internes et externes des autres ports sont calculés à partir de la valeur optimisée du déphasage interne du port de référence, à partir des formulés décrites précédemment.

Ainsi, le nombre de degrés de liberté de contrôle du convertisseur MAB est réduit à n, n étant le nombre total de ports. Le nombre de ports est supérieur à 2, et de préférence strictement supérieur à 2. Les paramètres de contrôle restants sont les (n-1) déphasages externes des ports autres que le port de référence et le déphasage interne du port de référence. Ainsi, le procédé de commande se résume à un système de (n-1) équations à n inconnues, qui peut être exécuté en temps réel.

Pour ce premier mode de réalisation il est avantageux de fixer k=7 pour l'approximation harmonique généralisée d'ordre k, pour le calcul du courant RMS et des pertes de conduction. Cette valeur présente un bon compromis entre précision et temps de calcul.

Selon un deuxième mode de réalisation, on calcule un ensemble d'au moins un paramètre de puissance correspondant aux pertes totales du convertisseur et au nombre d'interrupteurs du convertisseur en condition de ZVS.

Ainsi, à chaque itération du déphasage interne $\alpha_1$ du port de référence, le nombre d'interrupteurs du convertisseur en condition de ZVS et les pertes totales du convertisseur sont enregistrées.

Le calcul des pertes totales du convertisseur est identique au mode de réalisation précédent.

La détermination de la condition de commutation douce (condition de ZVS) est décrite dans le tableau ci-dessus décrit en lien avec le premier mode de réalisation.

Dans le deuxième mode de réalisation, le choix du déphasage interne optimal vise à maximiser le nombre d'interrupteurs en ZVS tout en diminuant les pertes totales le plus possible, alors que, dans le premier mode de réalisation, on vise seulement à minimiser les pertes totales, même si cela mène à un nombre plus petit d'interrupteurs en ZVS.

Il convient de rappeler qu'un interrupteur est activé à tension nulle (ZVS) si son courant de drain est négatif pendant son instant de commutation. Ce courant négatif circule à travers sa diode anti-parallèle, l'allumant, d'où la chute de tension au niveau de l'interrupteur. Par conséquent, dans un cas idéal, le fonctionnement ZVS d'un interrupteur dépend uniquement du sens de son courant.

Néanmoins, cette condition n'est pas suffisante dans un convertisseur pratique. En effet, la capacité parasite $C_{oss}$ entre le drain et la source de l'interrupteur impose qu'une quantité minimale d'énergie le traverse pendant l'instant de commutation pour se charger ou se décharger. Par conséquent, un courant minimum doit circuler à travers chaque port pendant ses instants de commutation, en supposant que le temps mort imposé soit suffisamment long pour que l'échange d'énergie ait lieu complètement. Cette valeur d'énergie peut être calculée en utilisant le circuit équivalent Thevenin d'un port $Prt_i$ représenté sur la figure 8.

La source de tension $V_{th,i}$ et l'inductance $L_{th,i}$ remplacent les ports restants du convertisseur MAB et sont calculées à partir des formules suivantes :

$$L_{th,i} = \frac{1}{\sum_{\substack{j=1 \\ j \neq i}}^{n} \frac{1}{L_{ij}}}$$

$$V_{th,i}(t) = \sum_{j=1, j \neq i}^{n} v_{ac,j}(t) . \frac{L_{th,i}}{L_{ij}}$$

**Pour** chaque port, il y a quatre instants de commutation dans une période de commutation $T_s$. Ces instants sont représentés sur la figure 4. Le courant dans chaque port étant symétrique d'un demi-cycle à l'autre, seuls deux instants de commutation doivent être étudiés pour chaque port ($\tau_{i1}$ et $\tau_{i2}$).

A chacun de ces instants, un interrupteur est allumé et un autre interrupteur est éteint. L'interrupteur qui est activé est l'interrupteur sur lequel les conditions ZVS sont examinées. Une commutation douce (ZVS) entraînera des pertes de commutation presque nulles.

Sur la figure 4, il est rappelé que les instants de commutation d'un port peuvent être exprimés en fonction de ses déphasages comme suit:

$$|\tau_{i1} = \left(\varphi_{1i} + \frac{\alpha_i}{2}\right) . \frac{T_s}{2\pi}$$

$$\tau_{i2} = \frac{T_s}{2} + \left(\varphi_{1i} - \frac{\alpha_i}{2}\right) . \frac{T_s}{2\pi}$$

En référence au tableau ci-dessus décrit pour le premier mode de réalisation, pour déterminer la condition de ZVS, une distinction est effectuée selon le cas $\alpha_i > 0$ ou $\alpha_i = 0$.

Ainsi, à chaque itération du procédé, c'est-à-dire pour chaque valeur du déphasage interne $\alpha_1$ du port de référence, le nombre de transistors en condition de commutation douce est déterminé.

La figure 9 illustre l'évolution du nombre de transistors en condition de commutation douce en fonction de la valeur du déphasage interne $\alpha_1$, pour un point d'opération considéré où la puissance est égale à 60% de la puissance nominale. La valeur de déphasage interne présentant le maximum de transistors en commutation douce est considérée comme étant la valeur optimale du déphasage interne $\alpha_{1,OPT}$ du port de référence (entre 0,8 et 1,5 rad sur la figure 9).

Pour ce deuxième mode de réalisation, il est avantageux de fixer k=101 (dans l'approximation harmonique généralisée d'ordre k), pour le calcul du nombre d'interrupteurs du convertisseur en condition de ZVS.

Cette valeur présente également un bon compromis entre précision et temps de calcul. Une précision plus importante est requise pour le calcul d'un courant instantané qu'un courant RMS, ce qui explique que la valeur optimale de k est différente par rapport au premier mode de réalisation.

Si plusieurs valeurs de valeur optimale du déphasage interne $\alpha_{1,OPT}$ présentent le même maximum de transistors en condition de commutation douce, un deuxième test consiste à déterminer, parmi le premier ensemble de valeurs, celle pour laquelle les pertes totales sont minimales.

Pour les ports différents du port de référence, les valeurs optimisées du déphasage interne $\alpha_{i,OPT}$ et du déphasage externe $\varphi_{i,OPT}$ sont déterminées à partir de la valeur optimisée du déphasage interne du port de référence $\alpha_{1,OPT}$, selon les formules précédemment introduites.

Le procédé comprend une dernière étape qui consiste à mettre à jour des commandes de commutation des interrupteurs en fonction des valeurs optimisées du déphasage interne $\alpha_{i,OPT}$ et du déphasage externe $\varphi_{i,OPT}$ de tous les ports.

A cet effet, et d'une façon connue de l'homme du métier, un microcontrôleur produit des signaux de commande PWM qui sont déphasés l'un par rapport à l'autre selon les valeurs optimales obtenues des déphasages internes et externes.

Le choix du premier (minimisation des pertes) ou du second (maximisation des interrupteurs en ZVS) dépend des priorités fixées par l'utilisateur.

Si la priorité est de maximiser l'efficacité du système, même si des commutations non-ZVS peuvent se produire sur certains commutateurs, alors l'utilisateur peut choisir le premier mode de réalisation, c'est-à-dire chercher à avoir des pertes totales minimales.

A contrario, si on cherche à privilégier la compatibilité électromagnétique, il est plutôt pertinent de mettre en œuvre le deuxième mode de réalisation.

Il peut être avantageux, lors du calcul du déphasage externe, de détecter, à chaque itération du déphasage interne $\alpha_1$ du port de référence, de détecter si le déphasage externe a une valeur strictement supérieure à 37°. En effet, au-delà de 37°, la différence entre $\sin(\varphi_i)$ et $\varphi_i$ devient trop importante, et l'approximation $\sin(\varphi_i) = \varphi_i$, utilisée pour calculer la puissance de sortie de chaque port, n'est plus considérée valable (cf. [Galeshi]). Si le déphasage externe d'un des ports a une valeur strictement supérieure à 37°, le courant augmente de façon non linéaire dans le convertisseur MAB.

Dans ce cas, le procédé ne comprend pas d'étape de mise à jour de la commande du convertisseur.

Selon un autre mode de réalisation avantageux, le procédé comprend une étape d'initialisation des valeurs de pertes totales du convertisseur $P_{total\ losses}$, du déphasage interne $\alpha_i$ et du déphasage externe $\varphi_i$ de chaque port.

Les valeurs initiales peuvent être déterminées en utilisation la modulation EPS (External Phase Shift), dans laquelle il est considéré que le déphasage interne $\alpha_i$ est nul pour tous les ports.

Il peut également être avantageux de mettre en œuvre le procédé de mise à jour des commandes du convertisseur sous réserve qu'un changement de tension aux bornes d'au moins un des ports ait été détecté, ce qui permet d'éviter une sollicitation permanente des ressources computationnelles du dispositif de mise à jour de la commande du convertisseur.

La figure 10 illustre un schéma bloc du dispositif 8 de commande des interrupteurs d'un convertisseur à multiples ponts actifs 1 selon l'invention. Le dispositif de commande 8 transmet les valeurs de déphasage interne $\alpha_{i,OPT}$ au convertisseur MAB 1.

Le dispositif de commande 8 permet aussi de découpler la commande dynamique des différents ports.

Les puissances sont mesurées au niveau des différents ports, et une boucle fermée avec des contrôleurs PI 9 (pour Proportionnel Intégral) est ajoutée afin de corriger l'erreur statique qui est due à l'incertitude du modèle mathématique et des valeurs des paramètres du convertisseur réel. Le contrôle de type Proportionnel Intégral est à privilégier en raison de sa simplicité, mais d'autres contrôleurs peuvent être envisagés, sous réserve qu'ils puissent également corriger l'erreur statique.

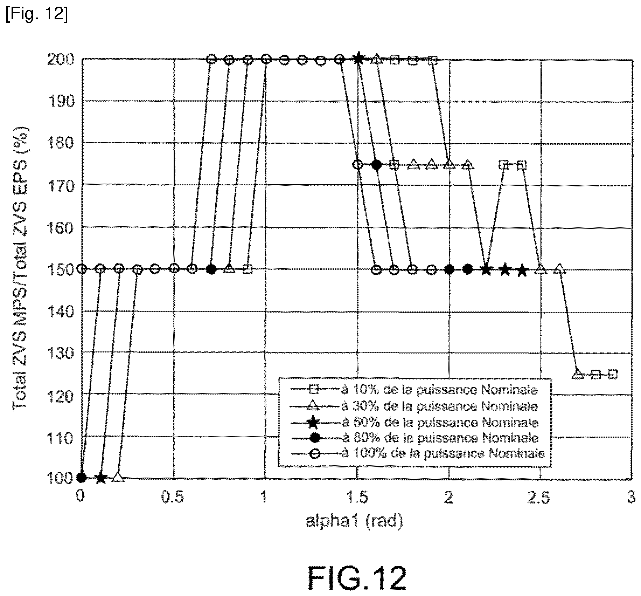

La figure 11 et la figure 12 illustrent les pertes totales du convertisseur en fonction de la valeur du déphasage interne $\alpha_1$ du port de référence, avec un convertisseur MAB à quatre ports à différents niveaux de puissance.

La figure 11 montre que l'utilisation du procédé selon l'invention réduit les pertes totales du système par rapport à la modulation EPS sur toute sa plage de fonctionnement, en particulier à faible puissance. De plus, pour chaque point de fonctionnement, il existe une valeur du déphasage interne $\alpha_1$ du port de référence où ces pertes atteignent un minimum global.

La présence de minima locaux dans la courbe de perte totale est provoquée par la saturation de certains déphasages internes des ports autres que les ports de référence. Ces valeurs ne peuvent pas être négatives ou supérieures à $\pi$ en radians. L'existence de minima locaux démontre qu'un algorithme de type « Perturber et Observer » ne peut pas atteindre un fonctionnement optimal, car il s'arrêterait au premier minimum local.

La figure 12 illustre le nombre de commutateurs en ZVS avec le procédé selon l'invention, rapporté au nombre de commutateurs en ZVS avec une technique de modulation EPS. Le procédé selon l'invention démontre qu'il permet également la restauration de condition ZVS au niveau de certains commutateurs. Par ailleurs, à tous les niveaux de puissances, la condition de ZVS est réalisée sur tous les commutateurs des ports à certaines valeurs du déphasage interne $\alpha_1$.

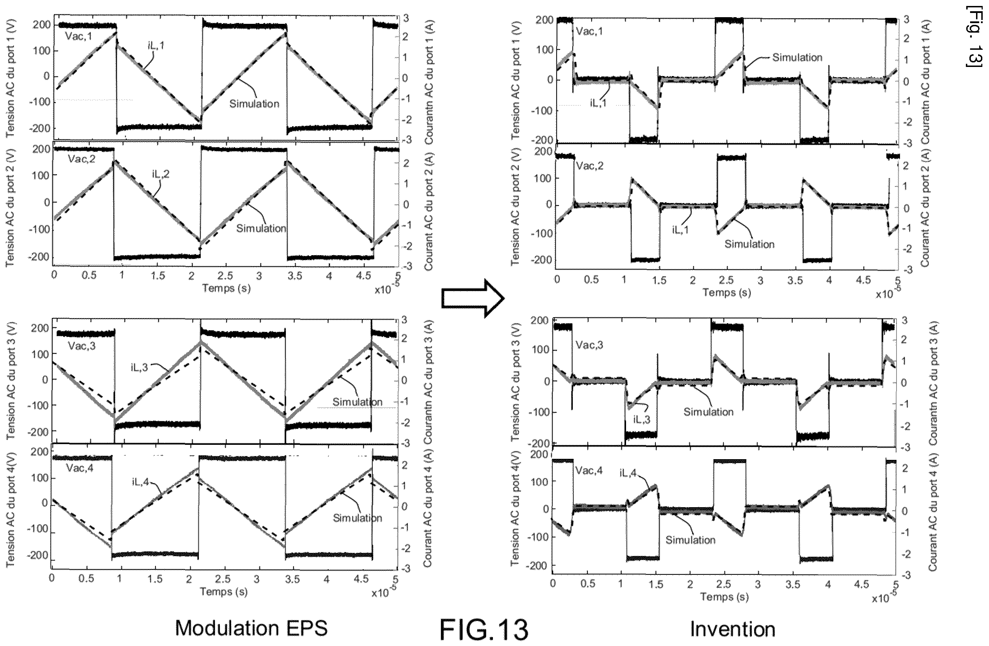

La figure 13 illustre, sur sa partie de gauche, les formes d'onde expérimentales du courant AC et de la tension AC au niveau de chaque port d'un convertisseur MAB à quatre ports fonctionnant à 8% de sa puissance nominale, avec une modulation EPS connue de l'état de l'art. La figure 13 illustre, sur sa partie de droite, les mêmes données avec le procédé selon l'invention.

Sur la simulation de la figure 13, le courant efficace moyen circulant à travers chaque port au point de fonctionnement choisi est $I_{rms,i}$ = 1.1 A lorsque la modulation EPS est appliquée, et est réduit à $I_{rms,i}$ = 462.5 mA. en utilisant le procédé selon l'invention.

En d'autres termes, le courant RMS est réduit d'environ 58 % avec le procédé selon l'invention sur ce point de fonctionnement étudié. De plus, on peut remarquer sur la figure 13 que la condition de ZVS est restaurée au niveau des ports 3 et 4, et que le ZCS (commutation à courant nul) se produit au niveau des commutateurs d'arrêt avec le procédé selon l'invention. Les courants alternatifs de pointe sont également réduits, ce qui entraîne moins de pertes fer dans le transformateur et les inductances du convertisseur MAB.

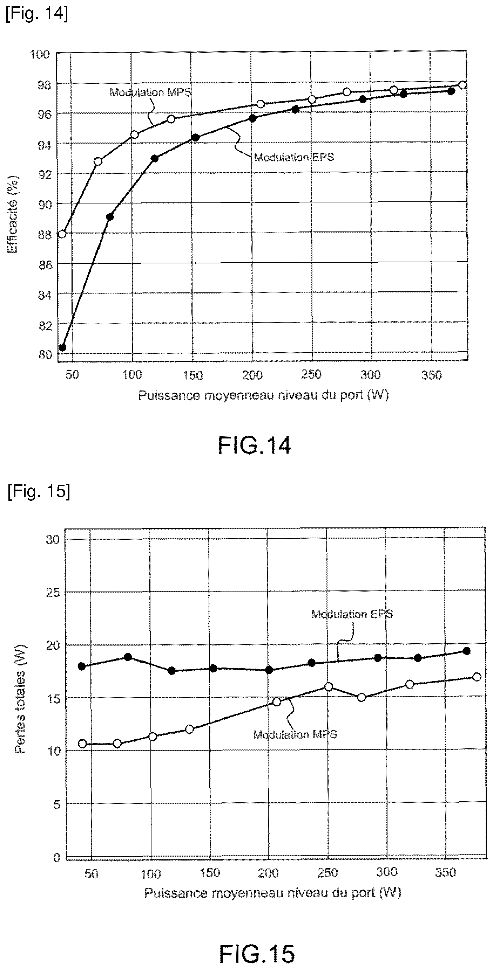

La figure 14 et la figure 15 illustrent respectivement les courbes expérimentales d'efficacité et de perte obtenues avec un convertisseur MAB à quatre ports à différents niveaux de puissance. Nous pouvons en déduire que la stratégie de contrôle proposée réduit considérablement les pertes totales du système, entraînant une augmentation du rendement total du convertisseur MAB sur toute sa plage de fonctionnement. Ce gain est particulièrement visible aux points de fonctionnement où une faible puissance circule à travers le convertisseur QAB.

**Références citées**

[Galeshi] Soleiman Galeshi, David Frey, Yves Lembeye, « Efficient and scalable power control in multi-port active-bridge converters », The 22nd European Conference on Power Electronics and Applications EPE' 20 ECCE Europe, Sep 2020, Lyon, France. 10.23919/EPE20ECCEEurope43536.2020.9215905, hal-03145571

[Hebala] O. M. Hebala, A. A. Aboushady, K. H. Ahmed, and I. Abdelsalam, « Generalized Active Power Flow Controller for Multiactive Bridge DC-DC Converters With Minimum-Current-Point-Tracking Algorithm, » IEEE Trans. Ind. Electron., vol. 69, no. 4, pp. 3764-3775, Apr. 2022, doi: 10.1109/TIE.2021.3071681.

[Dey] S. Dey, A. Mallik, and A. Akturk, « Investigation of ZVS Criteria and Optimization of Switching Loss in a Triple Active Bridge Converter Using Penta-Phase-Shift Modulation, » IEEE J. Emerg. Sel. Topics Power Electron., vol. 10, no. 6, pp. 7014-7028, Dec. 2022, doi: 10.1109/JESTPE.2022.3191987.

**Revendications**

1.  Procédé de commande des interrupteurs d'un convertisseur à multiples ponts actifs et comprenant n ports, le procédé comprenant les étapes consistant à :

    - a) effectuer un balayage entre 0 et $\pi$ de la valeur du déphasage interne ($\alpha_1$) d'un port dit de référence, et, pour chaque valeur du déphasage interne ($\alpha_1$) du port de référence, les sous-étapes suivantes :

    -- a1) pour chacun des n-1 ports différents du port de référence, calculer le déphasage interne ($\alpha_i$) en appliquant une condition d'élimination de l'échange de puissance réactive entre les ports, à partir de la tension mesurée aux bornes des ports ;
    --a2) pour chacun des n-1 ports différents du port de référence, calculer le déphasage externe ($\varphi_i$) à partir de contraintes sur des valeurs de puissances désirées ($P_i$) à chacun desdits n-1 ports différents du port de référence ;
    -- a3) calculer un ensemble d'au moins un paramètre de puissance comprenant les pertes totales du convertisseur ($P_{totallosses}$) et, de façon facultative, le nombre d'interrupteurs du convertisseur en condition de ZVS, la condition de ZVS étant définie par une commutation de l'interrupteur à tension nulle ;
    -- a4) déterminer une valeur optimisée du déphasage interne ($\alpha_{1,OPT}$) du port de référence, ladite valeur optimisée correspondant à un extremum global de l'ensemble d'au moins un paramètre de puissance ;

    - b) mise à jour des commandes de commutation des interrupteurs en fonction des valeurs optimisées du déphasage interne ($\alpha_{i,OPT}$) et du déphasage externe ($\varphi_{i,OPT}$) de tous les ports, les valeurs optimisées du déphasage interne ($\alpha_{i,OPT}$) et du déphasage externe ($\varphi_{i,OPT}$) étant calculées à partir de la valeur optimisée du déphasage interne du port de référence ($\alpha_{1,OPT}$).

2.  Procédé selon la revendication 1, dans lequel les pertes totales du convertisseur ($P_{total\ losses}$) correspondent à la somme des pertes de conduction ($P_{cond,i}$) sur tous les ports du convertisseur et des pertes de commutation ($P_{sw,i}$) sur tous les ports du convertisseur.

3.  Procédé selon l'une des revendications précédentes, dans lequel, l'ensemble d'au moins un paramètre de puissance correspond uniquement aux pertes totales du convertisseur ($P_{total\ losses}$), la valeur optimisée du déphasage interne ($\alpha_{1,OPT}$) du port de référence correspond à un minimum local des pertes totales du convertisseur ($P_{total\ losses}$).

4.  Procédé selon l'une des revendications 1 ou 2, dans lequel, l'ensemble d'au moins un paramètre de puissance correspond aux pertes totales du convertisseur ($P_{total\ losses}$) et au nombre d'interrupteurs du convertisseur en condition de ZVS, la valeur optimisée du déphasage interne ($\alpha_{1,OPT}$) du port de référence correspond à un maximum du nombre d'interrupteurs du convertisseur en condition de ZVS.

5.  Procédé selon la revendication 4, dans lequel, s'il existe au moins deux maxima du nombre d'interrupteurs du convertisseur en condition de ZVS, la valeur optimisée du déphasage interne ($\alpha_{1,OPT}$) du port de référence correspond à un minimum local des pertes totales du convertisseur ($P_{total\ losses}$), parmi les au moins deux maxima du nombre d'interrupteurs du convertisseur en condition de ZVS.

**6.** Procédé selon l'une des revendications précédentes, comprenant, entre les sous-étapes a2) et a3), une sous étape a21) comprenant la détection d'au moins un déphasage externe ($\varphi_{iMPS}$) ayant une valeur strictement supérieure à 37°, le procédé ne comprenant pas d'étape de mise à jour des instants de commutation des interrupteurs si au moins un déphasage externe ($\varphi_i$) ayant une valeur strictement supérieure à 37° est détecté.

**7.** Procédé selon l'une des revendications précédentes, comprenant une étape a0) d'initialisation à zéro de la valeur du déphasage interne ($\alpha_i$) de tous les ports, et d'attribution d'une valeur de déphasage externe ($\varphi_i$) qui est calculée par modulation de déphasage externe.

**8.** Procédé selon l'une des revendications précédentes, dans lequel les valeurs optimisées du déphasage externe ($\varphi_{i,OPT}$) sont transmises à un contrôleur proportionnel intégral (9) avant l'étape b).

**9.** Procédé selon l'une des revendications précédentes, dans lequel la condition d'élimination de l'échange de puissance réactive entre deux ports est définie par la formule suivante :

$$\frac{V_i}{n_{1i}} \cdot \cos\left(\frac{\alpha_i}{2}\right) = \frac{V_j}{n_{1j}} \cdot \cos\left(\frac{\alpha_j}{2}\right)$$

$V_i$ et $V_j$ correspondent respectivement à la tension DC aux bornes des ports i et j ;
$\alpha_i$ et $\alpha_j$ correspondent respectivement au déphasage interne des ports i et *j ;*
$n_{1i}$ et $n_{1j}$ correspondent respectivement au rapport de spires entre le port i et le port de référence, et au rapport de spires entre le port j et le port de référence.

**10.** Procédé selon l'une des revendications précédentes, dans lequel la mise à jour des commandes de commutation des interrupteurs est effectuée sous réserve qu'un changement de tension ou de valeur de puissance désirée aux bornes d'au moins un des ports a été détecté.

**11.** Procédé selon l'une des revendications précédentes, dans lequel les valeurs de puissances désirées ($P_i$) sont déterminées à partir d'un modèle d'approximation harmonique généralisée d'ordre k, et dans lequel k=7 pour le calcul des pertes totales du convertisseur ($P_{total\,losses}$), et k=101 pour le calcul du nombre d'interrupteurs du convertisseur en condition de ZVS.

**12.** Dispositif de commande des interrupteurs d'un convertisseur à multiples ponts actifs et comprenant n ports, le dispositif étant configuré pour :

- a) effectuer un balayage entre 0 et $\pi$ de la valeur du déphasage interne ($\alpha_1$) d'un port dit de référence, et, pour chaque valeur du déphasage interne ($\alpha_1$) du port de référence :

-- a1) pour chacun des n-1 ports différents du port de référence, calculer le déphasage interne ($\alpha_i$) en appliquant une condition d'élimination de l'échange de puissance réactive entre les ports, à partir de la tension mesurée aux bornes des ports ;
-- a2) pour chacun des n-1 ports différents du port de référence, calculer le déphasage externe ($\varphi_i$) à partir de contraintes sur des valeurs de puissances désirées ($P_i$) à chacun desdits n-1 ports différents du port de référence ;
-- a3) calculer un ensemble d'au moins un paramètre de puissance correspondant aux pertes totales du convertisseur ($P_{total\,losses}$) et, de façon facultative, au nombre d'interrupteurs du convertisseur en condition de ZVS ;
-- a4) déterminer une valeur optimisée du déphasage interne ($\alpha_{1,OPT}$) du port de référence, ladite valeur optimisée correspondant à un extremum global de l'ensemble d'au moins un paramètre de puissance ;

- b) mettre à jour des commandes de commutation des interrupteurs en fonction des valeurs optimisées du déphasage interne ($\alpha_{i,OPT}$) et du déphasage externe ($\varphi_{i,OPT}$) de tous les ports, les valeurs optimisées du déphasage interne ($\alpha_{i,OPT}$) et du déphasage externe ($\varphi_{i,OPT}$) étant calculées à partir de la valeur optimisée du déphasage interne du port de référence ($\alpha_{1,OPT}$).

**13.** Système de conversion, comprenant un convertisseur à multiples ponts actifs et comprenant n ports, et comprenant en outre un dispositif de commande selon la revendication 12.

[Fig. 1]

FIG.1

[Fig. 2]

FIG.2

[Fig. 3]

FIG.3

[Fig. 4]

FIG.4

[Fig. 5]

FIG.5

[Fig. 6]

Début

a0 — Calcul des variables de commandes ($\alpha_{i_{EPS}} = 0$ et $\varphi_{EPS}$), du nombre de conditions ZVS satisfaites $ZVS_{EPS}$ et des pertes totales $P_{pertes\ totales,EPS}$ avec la modulation EPS

a1 — Déclarer variable $Min = [ZVS_{EPS},\ P_{pertes\ totales,EPS},\ \alpha_{i_{EPS}},\ \varphi_{i_{EPS}}]$

Début du balayage avec $\alpha_1 = 0$

Calcul du déphasage interne $\alpha_{iMPS}$ des (n-1) autres ports

a2 — Calcul du déphasage externe $\varphi_{iMPS}$ des (n-1) autres ports

a21 — Non · $\exists\varphi_i > 37°$ · Oui

a3 — Calcul du nombre de conditions ZVS satisfaites $ZVS_{MPS}$ et calcul des pertes totales du système $P_{pertes\ totales}$

Oui · $ZVS_{MPS} > Min[0]$ · Non

$ZVS_{MPS} = Min[0]$ et $P_{pertes\ totales,MPS} \leq Min[1]$ · Oui · Non

a4 — Mise à jour $Min = [ZVS_{EPS},\ P_{pertes\ totales,EPS},\ \alpha_{i_{EPS}},\ \varphi_{i_{EPS}}]$

$\alpha_1 = \alpha_1 + step$

Non · $\alpha_1 > \pi$ · Oui

b — Transmission de la valeur de déphasage interne optimal et de la valeur de phase externe optimal stockées dans $Min$ pour la génération des signaux PWM des commutateurs

Oui · Changement dans le système ? · Non

FIG.6

[Fig. 7]

FIG.7

[Fig. 8]

FIG.8

[Fig. 9]

FIG.9

[Fig. 10]

FIG.10

[Fig. 11]

FIG.11

[Fig. 12]

FIG.12

[Fig. 13]

FIG.13

[Fig. 14]

FIG.14

[Fig. 15]

FIG.15

Europäisches
Patentamt

European
Patent Office

Office européen
des brevets

## RAPPORT DE RECHERCHE EUROPEENNE

Numéro de la demande

**EP 25 18 1209**

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | CHILAKALAPUDI GANESH ET AL: "Minimum Inductor Current Tracking in DAB-Based Isolated DC/DC Converter for Q Control With Harmonic Analysis Approach Employing FOGI Filter for EV Applications", IEEE TRANSACTIONS ON TRANSPORTATION ELECTRIFICATION, IEEE, vol. 10, no. 4, 3 février 2024 (2024-02-03), pages 8388-8399, XP011991699, DOI: 10.1109/TTE.2024.3362532 * page 8390 - page 8394; figures 1,7,9 * ----- | 1-13 | INV. H02M1/00 H02M3/335 |
| A | MOU DI ET AL: "Reactive Power Minimization for Modular Multi-Active-Bridge Converter With Whole Operating Range", IEEE TRANSACTIONS ON POWER ELECTRONICS, INSTITUTE OF ELECTRICAL AND ELECTRONICS ENGINEERS, USA, vol. 38, no. 7, 4 avril 2023 (2023-04-04), pages 8011-8015, XP011940892, ISSN: 0885-8993, DOI: 10.1109/TPEL.2023.3264748 [extrait le 2023-04-05] * page 8011 - page 8013; figures 1,3 * ----- -/-- | 1-13 | |

**DOMAINES TECHNIQUES RECHERCHES (IPC)**

H02M

Le présent rapport a été établi pour toutes les revendications

| Lieu de la recherche | Date d'achèvement de la recherche | Examinateur |
|---|---|---|
| La Haye | 1 octobre 2025 | Gusia, Sorin |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

page 1 de 2

| | Europäisches Patentamt European Patent Office Office européen des brevets | **RAPPORT DE RECHERCHE EUROPEENNE** | **Numéro de la demande** EP 25 18 1209 |
|---|---|---|---|

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | ZEMIRLINE NASSIM ET AL: "Dual-Phase Shift Control of a Multilevel Dual Active Bridge Converter", 2023 INTERNATIONAL AEGEAN CONFERENCE ON ELECTRICAL MACHINES AND POWER ELECTRONICS (ACEMP) & 2023 INTERNATIONAL CONFERENCE ON OPTIMIZATION OF ELECTRICAL AND ELECTRONIC EQUIPMENT (OPTIM), IEEE, 1 septembre 2023 (2023-09-01), pages 1-6, XP034455680, DOI: 10.1109/ACEMP-OPTIM57845.2023.10287076 * pages 2-4; figures 1,2 * ----- | 1-13 | |
| | | | **DOMAINES TECHNIQUES RECHERCHES (IPC)** |

Le présent rapport a été établi pour toutes les revendications

| Lieu de la recherche | Date d'achèvement de la recherche | Examinateur |
|---|---|---|
| La Haye | 1 octobre 2025 | Gusia, Sorin |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................................................
& : membre de la même famille, document correspondant

EPO FORM 1503 03.82 (P04C02)

page 2 de 2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **SOLEIMAN GALESHI** ; **DAVID FREY** ; **YVES LEMBEYE**. Efficient and scalable power control in multi-port active-bridge converters. *The 22nd European Conference on Power Electronics and Applications EPE' 20 ECCE Europe*, September 2020
- **O. M. HEBALA** ; **A. A. ABOUSHADY** ; **K. H. AHMED** ; **I. ABDELSALAM**. Generalized Active Power Flow Controller for Multiactive Bridge DC-DC Converters With Minimum-Current-Point-Tracking Algorithm. *IEEE Trans. Ind. Electron.*, April 2022, vol. 69 (4), 3764-3775

- **S. DEY** ; **A. MALLIK** ; **A. AKTURK**. Investigation of ZVS Criteria and Optimization of Switching Loss in a Triple Active Bridge Converter Using Penta-Phase-Shift Modulation. *IEEE J. Emerg. Sel. Topics Power Electron.*, December 2022, vol. 10 (6), 7014-7028